# EUROPEAN PATENT APPLICATION

(11) **EP 2 105 384 A1**
(43) Date of publication of application: **30.09.2009**
(21) Application number: 08005735.9
(22) Date of filing: 27.03.2008
(51) Int. Cl.: B65D 1/02, B29B 11/14, B29C 65/02, B29C 49/06, B29C 49/04, B29B 11/08, B29B 11/10

(54) **Heat sealable thermoplastic container having an improved top sealing surface, packaging assembly and process of packing a product**

(71) Applicant: LA SEDA DE BARCELONA S.A., 08820 El Prat De Llobregat, Barcelona (ES)
(72) Inventor: Balemans, Franciscus, 2900 Schoten (BE)
(74) Representative: Matkowska, Franck

(57) **Abstract**

The heat sealable thermoplastic container comprises a rigid neck (11) comprising an outer circumferential side wall (110) and terminated by an opened mouth (12), said mouth having a top seating surface (121) surrounded by the outer neck side wall (110). The top sealing surface (121) comprises a circumferential upper flat sealing area (1210) and a circumferential outer transition portion (1211) that joins the upper flat sealing area (1210) to the outer neck side wall (110). The transition edge (1213) between the transition portion (1211) and the outer neck side wall (110) is located below the plane (P) defined by the upper flat sealing area (1210). The outer transition portion (1211) comprises an outer L-shaped step (1211a; 1211b) that is a downward and outward extension of the upper flat sealing area (1210) or an outer flat slant wall that is a downward and outward extension of the upper flat sealing area (1210).

## Description

### Technical field

The present invention relates to the closure of a thermoplastic container having a rigid opened mouth, by heat welding a sealing foil onto the top sealing surface of the container mouth. More especially, the invention relates to a novel profile for the top sealing surface of the container mouth that improves the heat welding of the sealing foil onto the container mouth.

### Prior art

In the field of plastic packaging, it is a common practise to use heat sealed thermoplastic containers for storing sensitive products, like for example dairy products (UHT milk, yoghurt, cream, , ...). In this field, the rigid opened mouth of the container is hermetically closed by heat welding a sealing foil onto a top sealing surface. The heat welding operation is performed in such a way that the sealing foil hermetically closes the container and avoids, for example, any leakage of the product that is stored in the container. The heat welding operation is also performed in such a way that the sealing foil is efficiently bonded with the container, but can be however peeled off manually by the final consumer for opening the container.

There are different kinds of heat weldable sealing foils that are available and disclosed in the prior part for hermetically closing the mouth of a thermoplastic rigid container. A heat weldable sealing foil generally comprises at least two laminated layers: a thermal conductive layer, and a heat weldable layer.

In most cases, the thermal conductive layer is a metal layer having a good thermal conductivity, such as for example an aluminium layer. An aluminium layer exhibits also very high gas barrier properties. The use of a sealing membrane comprising an aluminium layer advantageously prevents gas transmission in or out of the container, and thereby increases the shelf life of the product stored in the container.

The heat weldable layer is a generally made of a thermoplastic film, such as for example a polyethylene film, coated onto one face of the thermal conductive layer.

The heat welding operation of the sealing foil onto the container is performed by heating the sealing foil in such a way that the heat weldable layer is melted, and by mechanically pressing the heated sealing foil against the top sealing surface of the container mouth, the melted heat weldable layer being in contact with the said top sealing surface.

The heating of the heat weldable layer of the sealing foil can be obtained by means of different heating processes. The most commonly used heating processes involve either a conductive heating of the sealing foil or an inductive heating of the sealing foil, by means notably of HF energy.

Whatever the heating process of the sealing foil is, when the melting temperature of the heat weldable layer of the sealing foil is close to the melting point of the thermoplastic material of the container mouth, the top sealing surface of the container mouth is deformed under the heat and mechanical pressure applied during the heat welding operation. In most cases, before the heat welding operation, the top sealing surface of the container mouth is substantially flat ; after the heat welding operation, the deformation of the top sealing surface of the container mouth creates a bulging of the top sealing surface of the container mouth.

When the sealing foil covers the circumferential outer edge of the top sealing surface, the inventors identified that the aforesaid bulging phenomenon of the top sealing surface of the container mouth involved at least the following drawbacks.

The bulging of the top sealing surface increases the size of the adhesion surface of the foil on the external side of the container mouth, and thereby increases the peel force needed for peeling off the sealing membrane. In some cases, this peel force becomes too high, especially for children, and prevents the final customer from properly and easily removing the sealing foil all around the container mouth.

### Objective of the invention

One objective of the invention is to propose a novel technical solution for closing the rigid mouth of a thermoplastic container by means of a heat weldable sealing foil, which solution improves the sealing membrane peeling off without prejudice for the efficiency of the sealing of the container mouth. In particular, the solution of the invention overcomes the aforesaid drawback derived from the bulging phenomenon of the top sealing surface of the container mouth.

### Summary of the invention

The solution of the invention is based on a novel profile for the top sealing surface of the container mouth that overcomes the aforesaid drawbacks derived from the bulging phenomenon of usual flat top sealing surface.

According to a first aspect, the invention relates to a heat sealable thermoplastic container that comprises rigid neck comprising an outer circumferential side wall and terminated by an opened mouth, said mouth having a top sealing surface surrounded by the outer neck side wall. The top sealing surface comprises a circumferential upper flat sealing area and a circumferential outer transition portion that joins the upper flat sealing area to the outer neck side wall. The transition edge between the transition portion and the outer neck side wall is located below the plane (P) defined by the upper flat sealing area. The outer transition portion comprises an outer L-shaped step that is a downward and outward extension of the upper flat sealing area, or an outer flat slant wall that is a downward and outward extension of the upper flat sealing area.

The said circumferential transition portion comprising a downward and outward extension of the upper flat sealing area in the form of a L-shaped or a flat slant wall provides room all around the container mouth for the melting and deformation of the top sealing surface of the container mouth.

The invention also relates to a packaging assembly comprising a heat sealable thermoplastic container having a mouth that is closed at least by a sealing foil, wherein said container comprises a rigid neck comprising an outer circumferential side wall and terminated by an opened mouth, said mouth having a top sealing surface surrounded by the outer neck side wall. The top sealing surface comprises a circumferential upper flat sealing area and a circumferential outer transition portion that joins the upper flat sealing area to the outer neck side wall. The transition edge between the transition portion and the outer neck side wall is located below the plane (P) defined by the upper flat sealing area. The sealing foil is heat welded with the top sealing surface of the container, and the top sealing surface is deformed in such a way that the upper transition edge between the upper flat sealing surface and the outer transition portion is still located inside or at the boundary of the area delimited by the plane (P') defined by the outer neck side wall.

A further object of the invention is a process of packing a product, and more especially a food-product, in a heat sealable thermoplastic container, said process comprising the following steps:
- introducing the product inside a heat sealable thermoplastic container as the defined above,
- heat welding a sealing foil with the top sealing surface of the container in order to hermetically close the container mouth,
and wherein during the heat welding step the top sealing surface of the container is heated and subjected to a mechanical pressure, and is deformed in such a way that the upper transition edge between the upper flat sealing surface and the outer transition portion is still located inside or at the boundary of the area delimited by the plane (P') defined by the outer neck side wall.

### Brief description of the drawings

The technical characteristics and advantages of the invention will appear more clearly on reading the following detailed description which is made by way of non-exhaustive and non-limiting examples, and with reference to the appended drawings, as follows:
- Figure 1 shows a thermoplastic plastic container having a top sealing surface of the invention,
- Figure 2 is an enlarged view, in cross section, of the neck and top sealing surface of the container of figure 1, made accordingly to a first variant of the invention.
- Figure 3 is a view in cross section of the container neck of figure 2, closed by a sealing foil,
- Figure 4 is a view in cross section of a standard container neck closed by a sealing foil,
- Figure 5 is a view in cross section of the neck and top sealing surface of a container, made accordingly to a second variant of the invention,
- Figure 6 is a view in cross section of the neck and top sealing surface of a container, made accordingly to a third variant of the invention,
- Figure 7 is a view in cross section of the neck and top sealing surface of a container, made accordingly to a fourth variant of the invention,
- Figure 8 is a view in cross section of the neck and top sealing surface of a container, made accordingly to a fifth variant of the invention.

### Detailed description

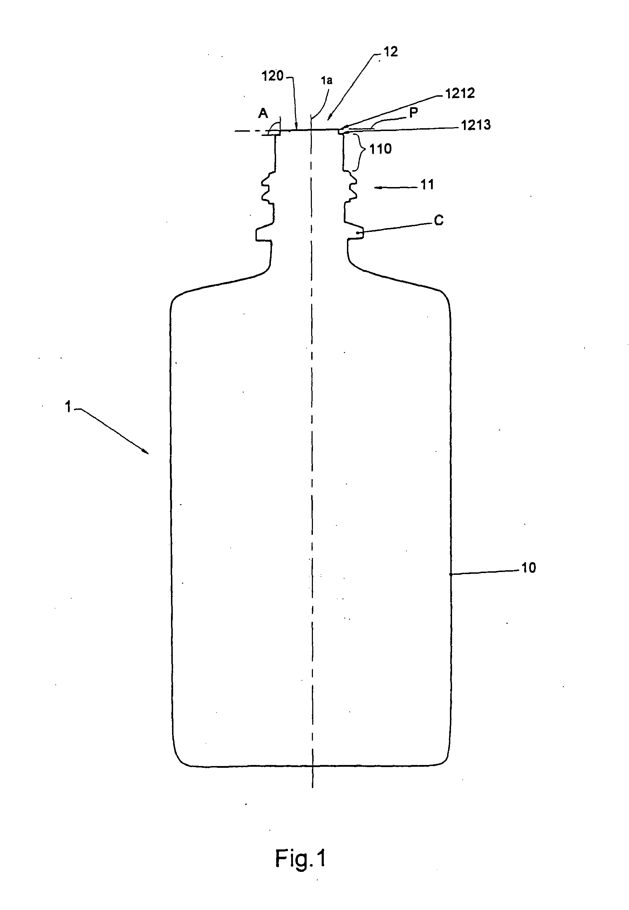

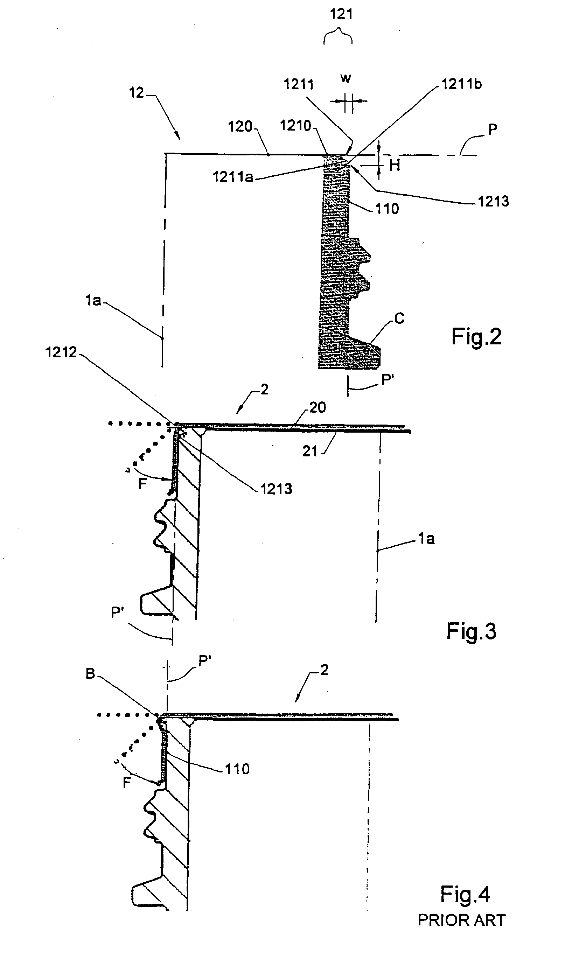

Directional words such as "downward", "upper" "lower", "top", "below", "horizontal", "vertical" are employed therein and in the claims with respect to the vertical and upright orientation of the container illustrated in figure 1 or to the vertical and upright orientation of the necks illustrated in figures 2 to 8.

Figure 1 shows a thermoplastic plastic container 1 having a main body 10 and a rigid neck 11 that comprises an outer circumferential side wall 110, and is terminated by an opened pouring mouth 12. Referring to the enlarged view of figure 2, the container mouth 12 has a central opening 120 surrounded by a circumferential top sealing surface 121.

Within the scope of the invention, this thermoplastic plastic rigid container 1 can be manufactured by any known moulding technique, including injection moulding, injection stretch-blow moulding, extrusion moulding.

Within the scope of the invention, this thermoplastic plastic rigid container 1 can be made in any known thermoplastic material. The preferred candidates for the material of the neck 11 are polyester or polyolefin polymers, in particular homo or copolymer of PET, or homo or copolymer of polypropylene. But the invention is however not limited to these particular thermoplastic polymers.

Within the scope of the invention, this thermoplastic plastic rigid container 1 can be a monolayer or multilayer container. The particular shape of the container body 10 shown on figure 1 is also given by way of example only, and the scope of the invention encompasses any kind of shape or volume for the container body 10.

Furthermore, when the container is manufactured by the well known technique of injection stretch-blow moulding, a preform is manufactured by injection-moulding and is blow moulded in a known way. During the blow moulding process, the body of the preform (under the collar neck C) is biaxially stretched, and the preform neck is not stretched. The profile of the top sealing surface 121, which is specific of the invention, is thus not modified and is the same for the preform and for the final biaxially stretched container. In the particular field of injection stretch-blow moulding, the word "container" used therein can mean indifferently the final container or the preform (intermediary smaller container).

The particular profile of the top sealing surface 121 of the container 1 of figures 1 and 2 is now going to be described in details.

The top sealing surface 121 of container 1 has an upper flat sealing area 1210 and a circumferential transition portion 1211. The upper flat sealing area 1210 is substantially perpendicular to the longitudinal axis 1a of the container and defines a main sealing plane (P). The upper flat sealing area 1210 forms an inner ring and is surrounded by the outer transition portion 1211. This outer transition portion 1211 is an outward and downward extension of the upper flat sealing surface 1210, and joins the upper flat sealing surface 1210 to the outer neck side wall 110. The lower transition edge 1213 between the transition portion 1211 and the outer neck side wall 110 is located below the plane (P) defined by the upper flat sealing area 1210.

In the particular embodiment of figures 1 and 2, this transition portion 1211 is constituted by a L-shaped step made of two walls: a first vertical wall 1211a that is a downward extension of the upper flat sealing area 1210 and is, in this particular embodiment, substantially perpendicular to the upper flat sealing area 1210 ; a second wall 1211b that is an outward extension of the first wall 1211a. In the particular embodiment of figures 1 and 2, second wall 1211b is perpendicular to first wall 1221a and is thus substantially parallel to plane (P) (figure 1/ angle (A) approximately equal to 90°).

The wording "L-shaped step" used therein is not limited to a step made of two walls 1211 a, 1211 b that are perpendicular, but within the scope of the invention, the "L-shaped step" can be more generally constituted by two transverse walls 1211a, 1211b forming a predetermined angle A, one wall 1211a being essentially a downward extension of the upper flat sealing area 1210, and the second wall 1211b being essentially an outward extension of the first wall 1221a. Preferably, but not necessarily, for practising the invention, this angle A between the two walls 1211a, 1211b is about 90° or is higher than 90°.

Referring to figure 3, the container mouth 12 is closed by a sealing foil 2 that has been heat welded onto and with the top sealing surface 121.

Within the scope of the invention, this sealing foil 2 can be any known heat weldable sealing membrane, and is made, for example, of an aluminium foil 20 coated with a thermoplastic film 21, like for example a polyester film. This sealing foil can cover the whole circumference of the outer transition portion 1211 or can cover only a part of the circumference of the outer transition portion 1211.

The packaging process of a product, like for example a dairy beverage, inside a container like the one illustrated in figure 1, comprises the main followings steps. The container is filled with the product. Then the sealing foil 2 is positioned onto the neck 11 of the filled container 1, and the sealing foil 2 is heat welded with the top sealing surface 121 of the container.

The heat welding operation can be performed by any known heat welding process, including notably conduction heating of the sealing membrane or induction heating of the sealing foil. Any existing heat welding equipment can thus advantageously be used for the heat welding operation. The heating of the sealing foil 2 is performed in such a way that the thermoplastic coating 21 is melted and adheres to the top sealing surface 121 of the container.

As illustrated in figure 3, the sealing membrane 2 is also folded around the transition portion 1211 (figure 3 - arrow F). This foil 2 can be a pre-shaped foil having the particular profile of figure 3 before being heat welded with the neck, or the folding of the foil 2 around the transition portion 1211 can be performed after the heat welding operation.

During the heat welding operation of the sealing membrane 2, under the effect of heat and mechanical pressure exerted on the sealing foil 2 and on the top sealing surface 121, the top sealing surface 121 of the container is also melting.

After the sealing operation, when the sealing foil 2 and the top sealing surface 121 of the container are cold, the top sealing surface 121 is definitely deformed as shown on figure 3. This deformation of the top sealing surface 121 mainly causes a reduction of the angle A between the walls 1211 a and 1221b of step 1211, second wall 1211 b being moved towards first wall 1211a

The height of the L-shaped step 1211, i.e. the longitudinal dimension of the transition portion 1211 measured along a direction that is parallel the longitudinal axis 1a of the container, is referenced "H" on figure 2. The width of the L-shaped step 1211, i.e. the transversal dimension of the stepped transition portion 1211 measured along a direction that is perpendicular to the longitudinal axis 1a of the container, is referenced "W" on figure 2.

The height H and width W of the L-shaped step 1211 are chosen, by one skilled in the art, in such a way that after deformation, the upper transition circumferential edge 1212 between the upper flat sealing area 1210 and the L-shaped step 1211 doest not project outside from the vertical plane P' that is defined by the outer neck side wall 110 and includes the lower transition edge 1213 between L-shape step 1211 and the neck side wall 110, but is still located inside or at the boundary of the area delimited by this plane P'. In order to obtain this deformation, the choice of these dimensions H and W will depend notably of the thermoplastic material of the top sealing surface 121 and the heat welding parameters, in particular the welding temperature, the pressure exerted on the top sealing surface during the heat welding operation, and the duration of the heat welding operation.

Generally, in most cases the height H of the transition portion 1211 is preferably smaller than or equal to the width W of the transition portion 1211 ; the height H of the transition portion 1211 can be for example between 0.1 mm and 1.5 mm ; the width W of the transition portion 1211 can be for example between 0.2 mm and 1.6 mm.

As a comparison, figure 4 shows the neck of a standard container whose mouth is closed by a sealing membrane 2, said container having a flat top sealing surface, without any transition portion 1211. During the heat welding operation, the top sealing part of the container is deforms and forms in the final container a bulge B, that projects outside the plane P' defined by the outer neck side wall 110.

This salient bulge B caused by the melting and deformation of the top sealing surface of the standard container is detrimental, because it increases the size of the adhesion surface between the folded sealing membrane 2 and the top sealing surface of the container, and thereby renders the sealing membrane 2 more difficult to remove. It is thus difficult for the final customer, especially for children, to properly remove the sealing membrane from the container. Furthermore, in some case this salient bulge B can be sharp and not convenient for user's lips.

In comparison, with the transition portion 1211 of the invention, the formation of the salient bulge B is advantageously avoided.

The size of the adhesion surface in the folding area of the sealing membrane 2 is thus reduced, and the peeling force needed for removing the sealing membrane is lower. Comparative experimental tests, made with PET containers and sealing membranes having a thermoplastic layer 21 made of a PET film, have shown that with the invention it was possible to reduce the peeling force by approximately 25%.

Furthermore, with a container of the invention, once the sealing foil 2 is removed, there is no salient bulge that could hurt the user's lips, and there is no remaining part on the top sealing surface of the container, which is therefore more convenient for the user when the user's mouth is in contact with the container during drinking.

The invention is not limited to the particular L-shaped geometry of the transition portion 1211 shown on figures 1 and 2.

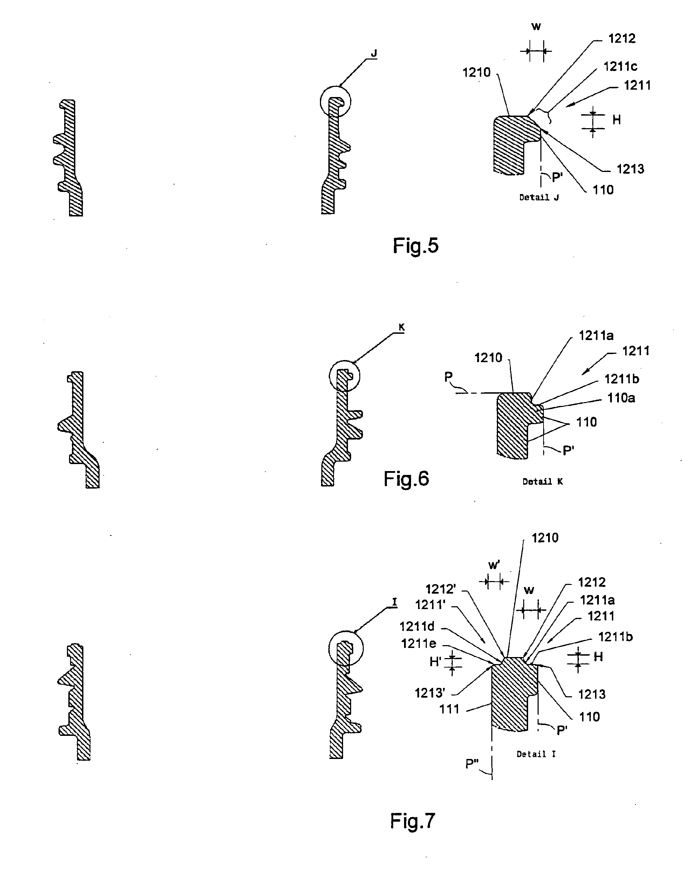

By way of non limitative and non exhaustive examples, other suitable examples of transition portion 1211 are illustrated in figures 5 to 8.

In figure 5, the transition portion 1211 is constituted by a flat slant wall 1211c that is a downward and outward extension of the upper flat sealing area 1210. The height H, the width W and the slope (H/W) of this slant flat wall 1211 c will be selected by one skilled in the art, in such a way that after deformation, the upper transition circumferential edge 1212 between the upper flat sealing area 1210 and the transition portion 1211 doest not project outside from the plane P' that is defined by the outer neck side wall 110 and includes the lower transition edge 1213 between the flat slant wall 1211c and the neck side wall 110, but is still located inside or at the boundary of the area delimited by this plane P'. The aforesaid considerations on the height H and width W of the transition portion 1211 are valid for this variant of figure 5, and also for the other variants of figures 6 to 8.

The variant of figure 6 differs from the variant of figure 2 by the geometry of the neck outer side wall 110 that forms a top ledge 110a.

In figure 7, the outer transition portion 1211 is constituted by a L-shaped step made of two walls 1211a and 1221b that form an angle A higher than 90°. In this variant, the top sealing surface also comprises an inner transition portion 1211' of height H' and width W. This inner transition portion 1211' is constituted by an inner L-shaped step 1211d, 1211e that is a downward and inward extension of the upper flat sealing area 1210 and that joins the said upper flat sealing area 1210 to the cylindrical inner side wall 111 of the neck 11. The aforesaid considerations on the outward deformation and on the height H and width W of the outer transition portion 1211 are valid for the inner deformation and for the height H' and width W' of the inner transition portion 1211'. In particular, after heat welding, the top sealing surface of the neck 11 of figure 7 is deformed in such a way that the upper transition circumferential edge 1212' between the upper flat sealing area 1210 and the L-shaped inner step 1211' doest not project outside from the vertical plane P" that is defined by the neck inner side wall 111 and includes the lower transition edge 1213' between L-shape step 1211' and the neck inner side wall 111, but is still located inside or at the boundary of the area delimited by this plane P".

Preferably, but not necessarily, as illustrated in figure 7, the inner transition portion 1211' and the outer transition portion 1211 are advantageously identical and symmetrical. In this variant, during the heat welding operation, the top sealing surface of the neck is deformed similarly inwardly and outwardly, i.e. on both sides of the upper flat sealing surface 1210.

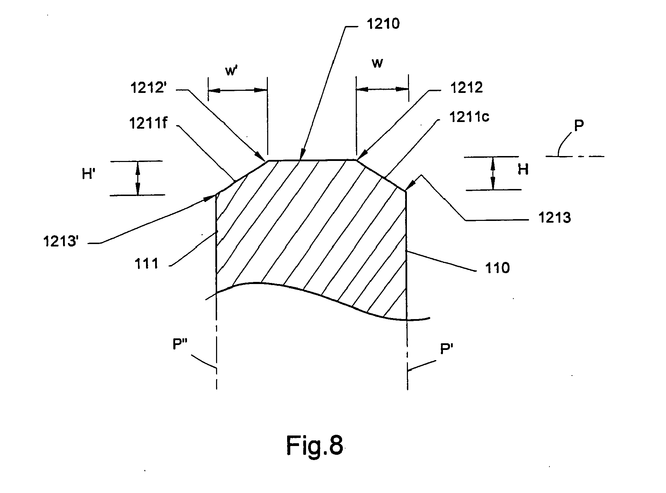

In figure 8, the outer transition portion 1211 is constituted by slant flat wall 1211c like the variant of figure 5. In addition, in this variant, the top sealing surface also comprise a second inner transition portion 1211'constituted by a inner flat slant wall 1211f; that is a downward and inward extension of the upper flat sealing area 1210 and that joins the said upper flat sealing area 1210 to the cylindrical inner wall 111 of the neck 11. In this variant, the inner transition portion 1211' and the outer transition portion 1211 are also identical and symmetrical.

The invention is not limited to the particular top sealing surface 121 profiles described in reference to the appended figures, but extends to any profile of top sealing surface 121 defined in the appended claims. In particular, the outer transition portion 1211 ( respectively : the inner transition portion 1211') is not necessarily constituted by a L-shaped step of flat slant wall, but can more generally comprise a L-shaped step or a flat slant wall that is a downward and outward (respectively : inward) extension of the upper flat sealing area 1210.

## Claims

1. A heat sealable thermoplastic container that comprises a rigid neck (11) comprising an outer circumferential side wall (110) and terminated by an opened mouth (12), said mouth having a top sealing surface (121) surrounded by the outer neck side wall (110), wherein the top sealing surface (121) comprises a circumferential upper flat sealing area (1210) and a circumferential outer transition portion (1211) that joins the upper flat sealing area (1210) to the outer neck side wall (110), wherein the transition edge (1213) between the transition portion (1211) and the outer neck side wall (110) is located below the plane (P) defined by the upper flat sealing area (1210), and wherein the outer transition portion (1211) comprises an outer L-shaped step (1211 a; 1211b) that is a downward and outward extension of the upper flat sealing area (1210) or an outer flat slant wall (1211c) that is a downward and outward extension of the upper flat sealing area (1210).

2. The container of claim 1, wherein the outer transition portion (1211) is constituted by an outer L-shaped step (1211a; 1211b) that is a downward and outward extension of the upper flat sealing area (1210).

3. The container of claims 1 or 2, wherein the outer L-shaped step of the transition portion is constituted by two walls (1211a; 1211b) forming a predetermined angle (A) of at least 90°.

4. The container of claims 1 or 2, wherein the outer L-shaped step of the transition portion is constituted by two walls (1211a; 1211b) forming a predetermined angle (A) of about 90°.

5. The container of any one of claims 1 to 4, wherein the outer L-shaped step comprises a vertical wall (1211a) that is substantially perpendicular to the upper flat sealing area (1210).

6. The container of any one of claims 1 to 5, wherein the outer L-shaped step comprises a horizontal wall (1211b) that is substantially parallel to the upper flat sealing area (1210).

7. The container of claim 1, wherein the outer transition portion (1211) is constituted by an outer flat slant wall (1211c) that is a downward and outward extension of the upper flat sealing area (1210).

8. The container of any one of claims 1 to 7, wherein the height (H) of the outer transition portion (1211) is smaller than or equal to the width (W) of the outer transition portion (1211).

9. The container of any one of claims 1 to 8, wherein the height (H) of the outer transition portion (1211) is between 0.1 mm and 1.5 mm.

10. The container of any one of claims 1 to 9, wherein the width (W) of the outer transition portion (1211) is between 0.2 mm and 1.6 mm.

11. The container of any one of claims 1 to 10, wherein the top sealing surface (121) comprises a circumferential inner transition portion (1211') that joins the upper flat sealing area (1210) to an inner neck side wall (111), wherein the transition edge (1213') between the inner transition portion (1211') and the inner neck side wall (110) is located below the plane (P) defined by the upper flat sealing area (1210), and wherein the inner transition portion (1211') comprises an inner L-shaped step (1211d; 1211e) that is a downward and inward extension of the upper flat sealing area (1210) or an inner flat slant wall (1211f) which is a downward and inward extension of the upper flat sealing area (1210).

12. The container of claim 11, wherein the inner transition portion (1211') is constituted by an inner L-shaped step (1211d; 1211 e) that is a downward and inward extension of the upper flat sealing area (1210).

13. The container of claims 11 or 12, wherein the inner L-shaped step of the transition portion is constituted by two walls (1211d; 1211e) forming a predetermined angle (A) of at least 90°.

14. The container of claims 11 or 12, wherein the inner L-shaped step of the transition portion is constituted by two walls (1211d; 1211e) forming a predetermined angle (A) of about 90°.

15. The container of any one of claims 11 to 14, wherein the inner L-shaped step comprises a vertical wall (1211d) that is substantially perpendicular to the upper flat sealing area (1210).

16. The container of any one of claims 11 to 15, wherein the inner L-shaped step comprises a horizontal wall (1211e) that is substantially parallel to the upper flat sealing area (1210).

17. The container of claim 11, wherein the inner transition portion (1211') is constituted by an inner flat slant wall (1211f) that is a downward and inward extension of the upper flat sealing area (1210).

18. The container of any one of claims 11 to 17, wherein the height (H') of the inner transition portion (1211') is smaller than or equal to the width (W') of the inner transition portion (1211').

19. The container of any one of claims 11 to 18, wherein the height (H') of the inner transition portion (1211') is between 0.1 mm and 1.5 mm.

20. The container of any one of claims 11 to 19, wherein the width (W') of the inner transition portion (1211') is between 0.2 mm and 1.6 mm.

21. The container of any one of claims 11 to 20, wherein the inner transition portion (1211') and the outer transition portion (1211) are identical and symmetrical.

22. The container of any one of claims 1 to 21, wherein the thermoplastic material of the neck (11) is selected from the group: polyester, polyolefin.

23. The container of claim 22, wherein the thermoplastic material of the neck (11) is a homo or copolymer of PET.

24. The container of claim 22, wherein the thermoplastic material of the neck (11) is a homo or copolymer of polypropylene.

25. A packaging assembly comprising a heat sealable thermoplastic container having a mouth (12) that is closed at least by a sealing foil (2), wherein said container comprises a rigid neck (11) comprising an outer circumferential side wall (110) and terminated by an opened mouth (12), said mouth having a top sealing surface (121) surrounded by the outer neck side wall (110), wherein the top sealing surface (121) comprises a circumferential upper flat sealing area (1210) and a circumferential outer transition portion (1211) that joins the upper flat sealing area (1210) to the outer neck side wall (110), wherein the transition edge (1213) between the transition portion (1211) and the outer neck side wall (110) is located below the plane (P) defined by the upper flat sealing area (1210), wherein the sealing foil (2) is heat welded with the top sealing surface (121) of the container, and wherein the top sealing surface is deformed in such a way that the upper transition edge (1212) between the upper flat sealing surface (1210) and the outer transition portion (1211) is still located inside or at the boundary of the area delimited by the plane (P') defined by the outer neck side wall (110).

26. The packaging assembly of claim 25, wherein the top sealing surface (121) comprises a circumferential inner transition portion (1211') that joins the upper flat sealing area (1210) to a inner neck side wall (111), wherein the transition edge (1213') between the inner transition portion (1211') and the inner neck side wall (110) is located below the plane (P) defined by the upper flat sealing area (1210), and wherein the top sealing surface is deformed in such a way that the' upper transition edge (1212') between the upper flat sealing surface (1210) and the inner transition portion (1211') is still located inside or at the boundary of the area delimited by the plane (P") defined by the inner neck side wall (111).

27. The packaging assembly of claim 25 or 26, wherein the container is the one defined in any one of claims 1 to 24.

28. A packaging assembly comprising the heat sealable thermoplastic container of any one of claims 1 to 24, and wherein the mouth (12) of the said container is closed at least by a sealing foil (2) that is heat welded with the top sealing surface (121) of the container.

29. The use of the packaging assembly of any one of claims 25 to 28, for storing a food product

30. A process of packing a product, and more especially a food-product, in a heat sealable thermoplastic container, said process comprising the following steps :
- introducing the product inside a heat sealable thermoplastic container (1) defined in any one of claims 1 to 24,
- heat welding a sealing foil (2) with the top sealing surface (121) of the container (1) in order to hermetically close the container mouth (12),
- and wherein during the heat welding step the top sealing surface (121) of the container is heated and subjected to a mechanical pressure, and is deformed in such a way that the upper transition edge (1212) between the upper flat sealing surface (1210) and the outer transition portion (1211) is still located inside or at the boundary of the area delimited by the plane (P') defined by the outer neck side wall (110).

31. The process of claim 30, wherein the container is the one defined in any one of claims 11 to 21, and wherein the top sealing surface is deformed in such a way that the upper transition edge (1212') between the upper flat sealing surface (1210) and the inner transition portion (1211') is still located inside or at the boundary of the area delimited by the plane (P") defined by the inner neck side wall (111).
